# EUROPEAN PATENT APPLICATION

(11) **EP 4 751 545 A1**
(43) Date of publication of application: **03.06.2026**
(21) Application number: 25218376.9
(22) Date of filing: 25.11.2025
(51) Int. Cl.: A01D 34/00, A01D 34/74

(54) **AN INTELLIGENT LAWN MOWER HEIGHT ADJUSTMENT MECHANISM**

(30) Priority: 27.11.2024 CN 202422897826 U
(71) Applicant: SHANGHAI ZHONGJIAN GAOKE ROBOT CO., LTD., Shanghai 200245 (CN)
(72) Inventor: Heng, Li, SHANGHAI, 200245 (CN)
(74) Representative: HGF

(57) **Abstract**

The present application relates to the field of lawn mower robotics, and provides a smart lawn mower height adjustment mechanism, comprising a housing, a pair of overlapping parts and a lifting mechanism. The pair of overlapping parts are adapted to connect to the lawn mower mechanism, the lifting mechanism has a first central axis and a pair of lifting parts that can be raised and lowered, the pair of lifting parts are symmetrically arranged on both sides of the first central axis, the pair of overlapping parts are adapted to be placed on the pair of lifting parts and the overlapping parts and the lawn mower mechanism can be raised and lowered on the housing through the lifting parts of the lifting mechanism. In the present invention, a pair of overlapping parts of the lawn mower mechanism are connected to a pair of lifting parts symmetrically arranged along a first central axis of the lifting mechanism. This makes the force on the lawn mower mechanism more uniform and the lifting and lowering process of the lawn mower mechanism by the lifting parts more stable. The lawn mower mechanism is less prone to shaking and damage and has better resistance to falling; the force on both sides of the lifting parts on the first central axis is symmetrical, which makes it easier for the lifting parts to maintain horizontal stability, reduces the internal frictional resistance of the lifting mechanism and improves durability and reliability.

## Description

### Technical Field

The present invention relates to the field of lawn mower robotics, and further relates to a smart lawn mower height adjustment mechanism.

### Background Art

With the development of technology, lawn mower robots can drive the lawn mower mechanism to move up and down with lifting mechanisms to meet the mowing height requirements of different types of grass. Most existing lifting mechanisms use a screw and a nut, with a motor driving the screw to rotate so that the nut can move up and down. The protruding part of the lawn mower mechanism directly overlaps the side of the nut closest to the lawn mower mechanism, meaning there is only one contact point between the lawn mower mechanism and the nut. This results in the lawn mower mechanism applying pressure only to the side of the nut closest to the lawn mower mechanism, making the nut prone to tilting towards that side. The stability of the lawn mower mechanism is poor and frictional resistance and shearing force between the nut and the screw are increased, requiring a higher output power from the lifting motor and increasing operating costs; the increased resistance between the screw and the nut also tends to cause wear and damage to the threads of the screw and nut, resulting in a shorter service life of the lifting mechanism and increased maintenance costs. Moreover, when traversing bumpy sections, the lawn mower mechanism is prone to shaking up and down, which in turn causes the protruding part of the lawn mower mechanism to break easily, increasing safety risks.

### Summary of Invention

In response to the above technical problems, the purpose of the present invention is to provide a smart lawn mower height adjustment mechanism. A pair of overlapping parts of the lawn mower mechanism are connected to a pair of lifting parts symmetrically arranged along a first central axis of the lifting mechanism. This makes the force on the lawn mower mechanism more uniform and the lifting and lowering process of the lawn mower mechanism by the lifting parts more stable. The lawn mower mechanism is less prone to shaking and damage and has better resistance to falling; the force on both sides of the lifting parts on the first central axis is symmetrical, which makes it easier for the lifting parts to maintain horizontal stability, reduces the internal frictional resistance of the lifting mechanism and improves durability and reliability.

In order to realize the above purpose, the smart lawn mower height adjustment mechanism provided by the present invention comprises a housing, a pair of overlapping parts and a lifting mechanism. The pair of overlapping parts are adapted to connect to the lawn mower mechanism, the lifting mechanism has a first central axis and a pair of lifting parts that can be raised and lowered, the pair of lifting parts are symmetrically arranged on both sides of the first central axis, the pair of overlapping parts are adapted to be placed on the pair of lifting parts and the overlapping parts and the lawn mower mechanism can be raised and lowered on the housing through the lifting parts of the lifting mechanism.

In some embodiments, the lifting mechanism comprises a lifting drive component and a lifting component, the lifting drive component has a first central axis, the lifting drive component is adapted to drive the lifting component to move along the first central axis, the lifting component is provided with the lifting parts and the lifting parts are disposed on both sides of the lifting component on the first central axis.

In some embodiments, the lifting mechanism further comprises a rotating component and the output end of the lifting drive component is connected to the rotating component ;
the lifting component further comprises a sleeve part disposed between the pair of lifting parts, the sleeve part is provided with a connecting hole in the middle, the sleeve part is disposed on the outside of the rotating component, the inner side of the connecting hole is adapted to be threadedly connected to the outside of the rotating component and the lifting drive component is adapted to drive the rotating component to rotate and realize the lifting movement of the lifting component.

In some embodiments, a receiving cavity is provided inside the rotating component, the lifting drive component is disposed within the receiving cavity of the rotating component and the lifting drive component is adapted to drive the rotating component to rotate around the first central axis to drive the lifting component to move along the first central axis.

In some embodiments, the lifting mechanism further comprises a lifting bracket, the lifting drive component, the rotating component and the lifting component are all disposed in the lifting bracket, a side of the lifting bracket near the lawn mower mechanism is provided with a reach inlet and the overlapping parts are adapted to pass through the reach inlet and be placed on the lifting parts;
the lifting bracket is further provided with chutes on the inner side walls of both sides of the first central axis and the lifting parts are adapted to be slidably disposed in the chutes.

In some embodiments, the lifting mechanism further comprises a base, the base is disposed below the lifting bracket and the rotating component is rotatably disposed on the base ;
and/or, a side of the lifting parts remote from the lawn mower mechanism is further provided with a magnetic component, the lifting bracket is provided with a Hall plate and the height of the lifting parts is sensed through the Hall plate and the magnetic component.

In some embodiments, the bottom of the overlapping parts is provided with a first arc segment, the first arc segment protrudes towards a side close to the lifting parts and the bottom of the first arc segment is disposed tangential to the top of the lifting parts.

In some embodiments, the bottom of the overlapping parts is further provided with a second arc segment, the second arc segment is located on a side of the first arc segment away from the lifting mechanism and fluidly connected with the first arc segment and the second arc segment is recessed toward a side away from the lifting parts.

In some embodiments, it further comprises a connecting rod mechanism, a first end of the connecting rod mechanism is rotatably connected to the housing and a second end is rotatably connected to both sides of the mowing bracket on the first central axis ;
the lifting mechanism is adapted to drive the connecting rod mechanism to rotate around the first end and realize the lifting of the lawn mower mechanism and the first arc segment of the overlapping parts slides relative to the top of the lifting parts.

In some embodiments, the lawn mower mechanism comprises a mowing bracket, a mowing drive component and a mowing element, the mowing drive component is adapted to drive the movement of the mowing element, the mowing drive component is disposed inside the mowing bracket and the overlapping parts are disposed on the top of the mowing bracket near the lifting mechanism.

In contrast to the prior art, the smart lawn mower height adjustment mechanism provided by the present invention has at least one of the following benefits:
1.A pair of overlapping parts of the lawn mower mechanism are connected to a pair of lifting parts symmetrically arranged along a first central axis of the lifting mechanism. This makes the force on the lawn mower mechanism more uniform and the lifting and lowering process of the lawn mower mechanism by the lifting parts more stable. The lawn mower mechanism is less prone to shaking and damage and has better resistance to falling; the force on both sides of the lifting parts on the first central axis is symmetrical, which makes it easier for the lifting parts to maintain horizontal stability, reduces the internal frictional resistance of the lifting mechanism and improves durability and reliability.
2.The lifting drive component is housed inside the rotating component, reducing the overall height of the lifting mechanism and making it smaller, more compact and less costly.
3.The first arc segment at the bottom of the overlapping parts is disposed tangent to the top of the lifting parts to reduce the friction between the overlapping parts and the lifting parts, reducing friction noise and energy loss and making the overlapping parts slide more easily on the lifting parts.
4.The second arc segment is located on the side of the first arc segment away from the lifting mechanism, which makes the side of the first arc segment away from the lifting parts recessed, thus preventing the overlapping parts from colliding with the lifting parts and increasing safety.

### Brief Description of Drawings

Preferred embodiments will be described below in a clear and understandable manner, in conjunction with the accompanying drawings, to further explain the above-mentioned characteristics, technical features, advantages and implementation methods of the present invention.
FIG. 1 is a positional diagram of the lifting parts and overlapping parts ;
FIG. 2 is a positional diagram of the lifting mechanism and lawn mower mechanism;
FIG. 3 is an exploded view of the lifting mechanism ;
FIG. 4 is a cross-sectional view of the lifting mechanism ;
FIG. 5 is a structural diagram of the lifting mechanism ;
FIG. 6 is a structural diagram of the overlapping parts ;
FIG. 7 is a cross-sectional view of the highest point of the lawn mower mechanism ;
FIG. 8 is a cross-sectional view of the lowest point of the lawn mower mechanism.

Reference Signs List:
Lawn mower mechanism 1, mowing bracket 11, overlapping parts 111, first arc segment 1111, second arc segment 1112,
lifting mechanism 2, first central axis 20, lifting drive component 21, lifting component 22, lifting parts 221, magnetic component 2211, sleeve part 222, rotating component 23, lifting bracket 24, reach inlet 241, sliding groove 242, Hall plate 243, base 25, connecting rod mechanism 3.

### Description of Embodiments

In order to more clearly illustrate the embodiments of the present invention or the technical solutions in the prior art, specific embodiments of the present invention will be described below with reference to the drawings. Obviously, the drawings in the following description are only some embodiments of the present invention. Those skilled in the art may obtain other drawings and obtain other embodiments based on these drawings without inventive effort.

For simplicity of the drawings, only the parts related to the present invention are shown schematically in each figure, and they do not represent the actual structure of the product. In addition, in order to make the drawings concise and easy to understand, in some drawings, only one of the components with the same structure or function is schematically depicted or only one of the components is labelled. Herein, "a/an" means not only "only this one" but also "more than one".

It should also be further understood that the term "and/or" as used in the description and the appended claims of the present application refers to any combination and all possible combinations of one or more of the associated listed items, and includes such combinations.

Herein, it should be noted that unless otherwise expressly specified and defined, the terms "mount", "connect" and "link" should be broadly understood. For example, they can refer to fixed connections, detachable connections or integrated connections; they can refer to mechanical connections or electrical connections; they can refer to direct connections or indirect connections through an intermediate medium, or internal connections between two components. The specific meaning of the above terms in the present invention may be understood on a case-by-case basis to those skilled in the art.

In addition, in the description of the present application, the terms "first", "second" etc. are only used for distinguishing purposes and should not be construed as indicating or implying relative importance. It should be noted that the above embodiments can all be freely combined as needed. The above is only a preferred embodiment of the present invention. It should be noted that for those skilled in the art, several improvements and modifications can be made without departing from the principles of the present invention, and these improvements and modifications should also be considered as within the scope of protection of the present invention.

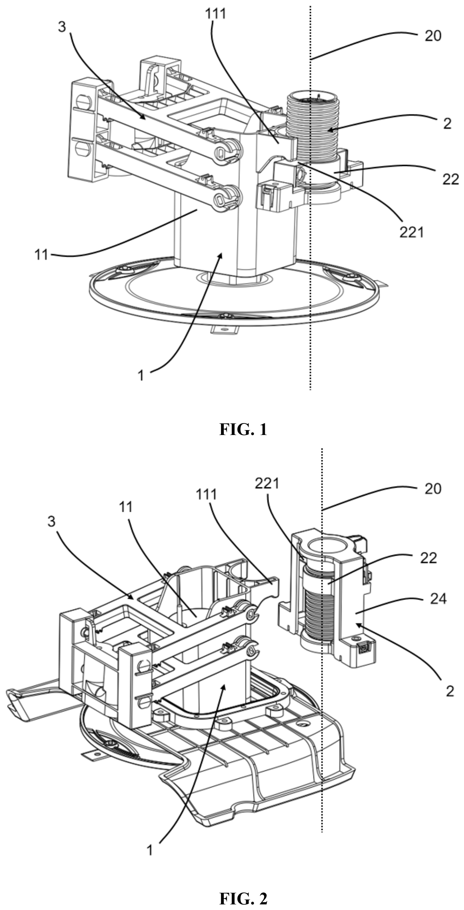

Referring to FIGS. 1 and 2, the present invention provides a height adjustment mechanism for smart lawn mower, the height adjustment mechanism comprising a housing, a pair of overlapping parts 111 and a lifting mechanism 2. The pair of overlapping parts 111 are adapted to connect to the lawn mower mechanism 1; the lawn mower mechanism 1 is provided with a pair of overlapping parts 111, the lifting mechanism 2 has a first central axis 20 and a pair of lifting parts 221 that can be raised and lowered, the pair of lifting parts 221 are symmetrically arranged on both sides of the first central axis 20, the pair of overlapping parts 111 are adapted to be placed on the pair of lifting parts 221 and the overlapping parts 111 and the lawn mower mechanism 1 can be raised and lowered on the housing through the lifting parts 221 of the lifting mechanism 2.

In the present embodiment, a pair of overlapping parts 111 of the lawn mower mechanism 1 are connected to a pair of lifting parts 221 symmetrically arranged along a first central axis 20 of the lifting mechanism 2. This makes the force on the lawn mower mechanism 1 more uniform and the lifting and lowering process of the lawn mower mechanism 1 by the lifting parts 221 more stable. The lawn mower mechanism 1 is less prone to shaking and damage and has better resistance to falling; the force on both sides of the lifting parts 221 on the first central axis 20 is symmetrical, which makes it easier for the lifting parts 221 to maintain horizontal stability, reduces the internal frictional resistance of the lifting mechanism 2 and improves durability and reliability.

Specifically, the lifting mechanism 2 is symmetrically provided with a pair of lifting parts 221 on both sides of the first central axis 20, and the lawn mower mechanism 1 is also provided with a pair of overlapping parts 111 on both sides of the first central axis 20. The two overlapping parts 111 are suitable for overlapping and placing on the lifting parts 221. The lifting force of the lifting parts 221 on the lawn mower mechanism 1 is distributed to the two overlapping parts 111. This makes the force on the lawn mower mechanism 1 more uniform and the lifting and lowering process of the lawn mower mechanism 1 by the lifting parts 221 more stable. The lawn mower mechanism 1 is less prone to shaking and damage and has better resistance to falling. At the same time, the pressure of the lawn mower mechanism 1 on the lifting mechanism 2 is also distributed to the two lifting parts 221, and the force on the lifting parts 221 is symmetrically arranged relative to the first central axis 20 so that the lifting parts 221 can maintain relative horizontal stability, reducing the internal frictional resistance of the lifting mechanism 2 and improving durability and reliability.

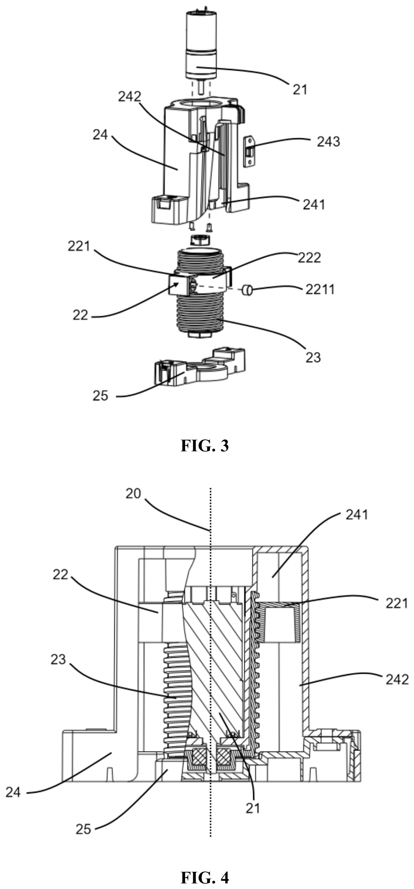

Referring to FIGS. 2 and 3, the lifting mechanism 2 comprises a lifting drive component 21, a lifting component 22 and a rotating component 23, the lifting drive component 21 has a first central axis 20, the lifting drive member 21 is adapted to drive the lifting component 22 to move along the first central axis 20, the lifting component 22 is provided with a pair of lifting parts 221 and the lifting parts 221 are disposed on both sides of the lifting component 22 on the first central axis 20. The output end of the lifting drive component 21 is connected to the rotating component 23; the lifting component 22 is threadedly connected to the rotating component 23 and the lifting drive component 21 drives the rotating component 23 to rotate to drive the lifting component 22 to move up and down. It is worth noting that in actual use, the rotating component 23 is a screw, the lifting component 22 is a nut and the lifting drive component 21 is a lifting motor. In a modified embodiment, the lifting drive component 21 may also directly drive the lifting component 22 to move up and down, as long as the lifting component 22 can drive the lifting movement of the lawn mower mechanism 1.

More specifically, the lifting component 22 further comprises a sleeve part 222 disposed between the pair of lifting parts 221, the sleeve part 222 is provided with a connecting hole in the middle, the sleeve part 222 is disposed on the outside of the rotating component 23, the inner side of the connecting hole is adapted to be threadedly connected to the outside of the rotating component 23 and the lifting drive component 21 is adapted to drive the rotating component 23 to rotate and realize the lifting movement of the lifting component 22.

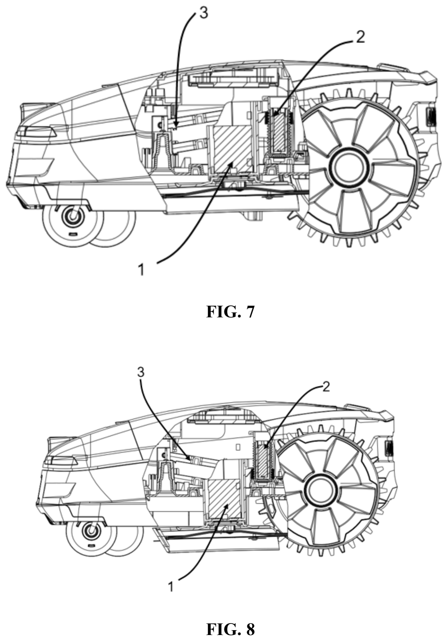

Referring to FIGS. 7 and 8, when the height of the lawn mower mechanism 1 needs to be increased, the lifting drive component 21 drives the rotating component 23 to rotate, and the lifting component 22 moves upward through the thread directly connected to the rotating component 23 and drives the overlapping parts 111 of the lawn mower mechanism 1 to rise through the lifting parts 221, thereby causing the entire lawn mower mechanism 1 to move upward to a corresponding position to increase the mowing height of the lawn mower robot. When the height of the lawn mower mechanism 1 needs to be decreased, the lifting drive component 21 drives the rotating component 23 to rotate in the opposite direction, and the lifting component 22 moves downward through the thread directly connected to the rotating component 23 and drives the overlapping parts 111 of the lawn mower mechanism 1 to descend through the lifting parts 221, thereby causing the entire lawn mower mechanism 1 to move downward to a corresponding position to decrease the mowing height of the lawn mower robot.

Further, referring to FIGS. 3 and 4, a receiving cavity is provided inside the rotating component 23, the lifting drive component 21 is disposed within the receiving cavity of the rotating component 23 and the lifting drive component 21 is adapted to drive the rotating component 23 to rotate around the first central axis 20 to drive the lifting component 22 to move along the first central axis 20.

In the present embodiment, the lifting drive component 21 is housed inside the rotating component 23 and the lifting drive member 21 and the transmission component are disposed overlapping on the first central axis 20, reducing the overall height of the lifting mechanism 2 and making it smaller, more compact and less costly.

Specifically, by housing the lifting drive component 21 inside the rotating component 23, the lifting drive component 21 can more easily drive the rotating component 23 to rotate, thereby reducing the overall height of the lifting drive component 21 and the rotating component 23, reducing the size of the lifting mechanism 2 and reducing space occupation. The rotating component 23 has a receiving cavity, and the top of the receiving cavity is provided with an opening. The lifting drive component 21 is adapted to be placed in the receiving cavity after passing through the opening, and then the opening is closed by a cover. The lifting drive component 21 comprises a motor bracket and a motor, the motor is disposed inside the motor bracket and the motor bracket is adapted to be placed in the receiving cavity of the rotating component 23. It is worth noting that this embodiment is a preferred embodiment of the present application. In a modified embodiment, the lifting drive component 21 may also be disposed at the top of the rotating component 23; that is, the lifting drive component 21 is not located inside the rotating component 23.

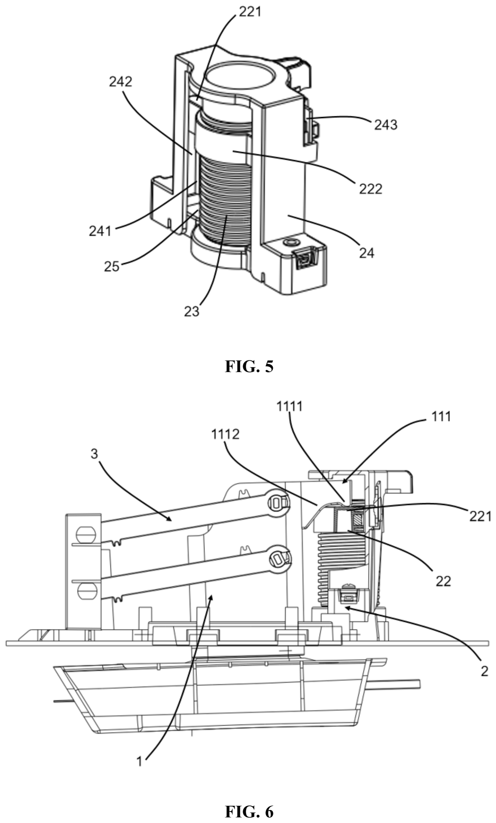

Referring to FIGS. 2 and 5, the lifting mechanism 2 further comprises a lifting bracket 24, the lifting drive component 21, the rotating component 23 and the lifting component 22 are all disposed in the lifting bracket 24, a side of the lifting bracket 24 near the lawn mower mechanism 1 is provided with a reach inlet 241 and the overlapping parts 111 are adapted to pass through the reach inlet 241 and be placed on the lifting parts 221. The overlapping parts 111 are at least partially located inside the lifting bracket 24 and the reach inlet 241 of the lifting bracket 24 also limits the overlapping parts 111, allowing the overlapping parts 111 to move up and down along the reach inlet 241. This makes the movement of the overlapping parts 111 more regular and stable and prevents the overlapping parts 111 from swaying left and right and causing the lawn mower mechanism 1 to sway left and right, thus improving the stability of the lawn mower mechanism 1. In particular, when traversing bumpy sections, the overlapping parts 111 can also slide stably up and down along the reach inlet 241. When the overlapping parts 111 fall, they can return to the top of the lifting parts 221 along the reach inlet 241, preventing the overlapping parts 111 from accidentally leaving the lifting mechanism 2 and causing the lawn mower mechanism 1 to fall accidentally, thus reducing the risk of damage to the lawn mower mechanism 1. The lifting bracket 24 is further provided with chutes 242 on the inner side walls of both sides of the first central axis 20 and the lifting parts 221 are adapted to be slidably disposed in the chutes 242. The lifting drive component 21 drives the rotating component 23 to rotate, so as to drive the lifting component 22 to move up and down along the first central axis 20. At this time, the lifting component 22 can slide up and down along the chutes 242, and the chutes 242 can limit the sliding direction of the lifting component 22 to prevent the lifting component 22 from rotating with the rotating component 23, which would obstruct its lifting movement, making the lifting movement of the lifting component 22 more stable and continuous.

Further, a side of the lifting parts 221 remote from the lawn mower mechanism 1 is further provided with a magnetic component 2211, the lifting bracket 24 is provided with a Hall plate 243 and the height of the lifting parts 221 is sensed through the Hall plate 243 and the magnetic component 2211.

In the present embodiment, the Hall plate 243 of the lifting bracket 24 can determine the height position of the lifting parts 221 by sensing the relative position of the magnetic component 2211 of the lifting parts 221, thereby determining the height position of the overlapping parts 111 and the lawn mower mechanism 1 so as to accurately control the mowing height. It is worth noting that the magnetic component 2211 may also be disposed at other locations on the lifting component 22 or the lawn mower mechanism 1, which is not further limited here by the present application.

Further, the lifting mechanism 2 further comprises a base 25, the base 25 is disposed below the lifting bracket 24 and the rotating component 23 is rotatably disposed on the base 25. The base 25 supports the rotating component 23. The base 25 is provided with a bearing adapted to connect to the rotating component 23 and the rotating component 23 can rotate on the bearing. It is worth noting that the base 25 can be set separately, with the lifting mechanism 2 as an integral device, and the lifting mechanism 2 can be modularly designed to facilitate the modularity of the lifting mechanism 2 and make it easy to carry and install; or the casing can be used directly as a replacement instead. This is not further limited by the present application.

Further, referring to FIG. 6, the bottom of the overlapping parts 111 is provided with a first arc segment 1111, the first arc segment 1111 protrudes towards a side close to the lifting parts 221 and the bottom of the first arc segment 1111 is disposed tangential to the top of the lifting parts 221.

In the present embodiment, the first arc segment 1111 at the bottom of the overlapping parts 111 is disposed tangent to the top of the lifting parts 221 to reduce the friction between the overlapping parts 111 and the lifting parts 221, reducing friction noise and energy loss and making the overlapping parts 111 slide more easily on the lifting parts 221.

Specifically, the lawn mower mechanism 1 comprises a mowing bracket 11, a mowing drive component and a mowing element, the mowing drive component is adapted to drive the movement of the mowing element, the mowing drive component is disposed inside the mowing bracket 11 and the overlapping parts 111 are disposed on the top of the mowing bracket 11 near the lifting mechanism 2. The mowing bracket 11 has a second central axis and the second central axis is parallel to the first central axis 20. The overlapping parts 111 are provided on the side of the mowing bracket 11 near the lifting mechanism 2, the overlapping parts 111 extend towards the side near the lifting mechanism 2 and the overlapping parts 111 are provided on the top of a side wall of the mowing bracket 11, reducing the overall height of the lawn mower mechanism 1 and the lifting mechanism 2. It is worth noting that the overlapping parts 111 may also be located at other positions on the side of the mowing bracket 11 near the lifting mechanism 2. This is not further limited by the present application.

The lawn mower mechanism 1 is connected to the housing through a connecting rod mechanism 3, a first end of the connecting rod mechanism 3 is rotatably connected to the housing and a second end is rotatably connected to both sides of the mowing bracket 11 on the first central axis 20; the connecting rod mechanism 3 comprises a plurality of connecting rods spaced apart along the first central axis 20, the connecting rods comprise a first bracket, a second bracket and a third bracket, the second bracket and the third bracket are located on both sides of the first central axis 20, the first bracket connects the middle part of the first bracket and the second bracket and both the second bracket and the third bracket are rotatably connected to the housing at one end and to the mowing bracket 11 of the lawn mower mechanism 1 at the other end. The lifting mechanism 2 is connected to the end of the lawn mower mechanism 1 away from the connection assembly. When the lifting mechanism 2 drives the lawn mower mechanism 1 to rise and fall, the lifting mechanism 2 is adapted to drive the connecting rod mechanism 3 to rotate around the first end and realize the rising and falling of the lawn mower mechanism 1. At this time, the first arc segment 1111 of the overlapping parts 111 slides relative to the top of the lifting parts 221. The first arc segment 1111 is located on the side of the overlapping parts 111 away from the lawn mower mechanism 1 and protrudes downward along the first central axis 20. The first arc segment 1111 at the bottom of the overlapping parts 111 is disposed tangent to the top of the lifting parts 221. The friction of the first arc segment 1111 sliding on the top of the lifting parts 221 is minimized, reducing friction noise and energy loss and making the overlapping parts 111 slide more easily on the lifting parts 221. The first arc segment 1111 at the bottom of the overlapping parts 111 ensures that it is always in tangential contact with the plane at the top of the lifting parts 221 within its range of motion. Rolling friction makes the lifting mechanism 2 rise and fall more smoothly and also reduces the wear of the overlapping point between the overlapping parts 111 and the lifting parts 221. In a modified embodiment, the lifting parts 221 may also be configured as an upwardly protruding circle, the bottom of the overlapping parts 111 may be flat or circular and the top of the lifting parts 221 may be tangent to the bottom of the overlapping parts 111 to achieve the same effect of reducing wear as in the above embodiment. Therefore, the top of the lifting parts 221 can be upwardly protruding and tangent to the overlapping parts 111, or the overlapping parts 111 can be downwardly protruding and tangent to the lifting parts 221. The present application does not make any further limitations, as long as the lifting parts 221 are tangent to the overlapping parts 111.

Further, the bottom of the overlapping parts 111 is further provided with a second arc segment 1112, the second arc segment 1112 is located on a side of the first arc segment 1111 away from the lifting mechanism 2 and fluidly connected with the first arc segment 1111 and the second arc segment 1112 is recessed toward a side away from the lifting parts 221.

In the present embodiment, the second arc segment 1112 is located on the side of the first arc segment 1111 away from the lifting mechanism 2, which makes the side of the first arc segment 1111 away from the lifting parts 221 recessed, thus preventing the overlapping parts 111 from colliding with the lifting parts 221 and increasing safety.

Specifically, the second arc segment 1112 is located on the side of the overlapping parts 111 near the lawn mower mechanism 1 and is concave upward along the first central axis 20. The second arc segment 1112 connects the mowing bracket 11 and the first arc segment 1111. During the relative sliding process of the first arc segment 1111 and the top of the lifting parts 221, the side wall of the lifting parts 221 is relatively close to or far away from the lawn mower mechanism 1. This makes the lifting parts 221 very likely to collide with the connection between the overlapping parts 111 and the mowing bracket 11. Therefore, the side of the overlapping parts 111 away from the first arc segment 1111 is set as the inwardly concave second arc segment 1112, so that one end of the overlapping parts 111 is as far away from the lifting parts 221 as possible, thus preventing the overlapping parts 111 from colliding with the lifting parts 221 and causing damage to the overlapping parts 111 or the lifting parts 221 and increasing safety.

It should be noted that the above embodiments can all be freely combined as needed. The above is only a preferred embodiment of the present invention. It should be noted that for those skilled in the art, several improvements and modifications can be made without departing from the principles of the present invention, and these improvements and modifications should also be considered as within the scope of protection of the present invention.

The present invention relates at least to a smart lawn mower height adjustment mechanism, called lawn mower mechanism 1, characterised in that it comprises:
a housing,
a pair of overlapping parts 111, and
a lifting mechanism 2,
said pair of overlapping parts 111 being adapted to connect to the lawn mower mechanism 1, said lifting mechanism 2 having a first central axis 20 and a pair of lifting parts 221 that can be raised and lowered,
said pair of lifting parts 221 being symmetrically arranged on both sides of the first central axis 20,
said pair of overlapping parts 111 being adapted to be placed on said pair of lifting parts 221, and
said pair of overlapping parts 111 and said lawn mower mechanism 1 being suitable to be raised and lowered on the housing through the pair of lifting parts 221 of the lifting mechanism 2.

Advantageously, the lifting mechanism 2 comprises a lifting drive component 21 and a lifting component 22, the lifting drive component 21 has a first central axis 20, the lifting drive component 21 is adapted to drive the lifting component 22 to move along the first central axis 20, the lifting component 22 is provided with the pair of lifting parts 221 and the pair of lifting parts 221 are disposed on both sides of the lifting component 22 on the first central axis 20.

Advantageously, the lifting mechanism 2 further comprises a rotating component 23 and the output end of the lifting drive component 21 is connected to the rotating component 23.

Advantageously, the lifting component 22 further comprises a sleeve part 222 disposed between the pair of lifting parts 221, the sleeve part 222 is provided with a connecting hole in the middle, the sleeve part 222 is disposed on the outside of the rotating component 23, the inner side of the connecting hole is adapted to be threadedly connected to the outside of the rotating component 23 and the lifting drive component 21 is adapted to drive the rotating component 23 to rotate and realize the lifting movement of the lifting component 22.

Advantageously, a receiving cavity is provided inside the rotating component 23, the lifting drive component 21 is disposed within the receiving cavity of the rotating component 23 and the lifting drive component 21 is adapted to drive the rotating component 23 to rotate around the first central axis 20 to drive the lifting component 22 to move along the first central axis 20.

Advantageously, the lifting mechanism 21 further comprises a lifting bracket 24, the lifting drive component 21, the rotating component 23 and the lifting component 22 are all disposed in the lifting bracket 24, a side of the lifting bracket 24 near the lawn mower mechanism 1 is provided with a reach inlet 241, and the pair of overlapping parts 111 are adapted to pass through the reach inlet 241 and to be placed on the pair of lifting parts 221.

Advantageously, the lifting bracket 24 is further provided with chutes 242 on inner side walls of both sides of the first central axis 20 and the pair of lifting parts 221 are adapted to be slidably disposed in the chutes 242.

Advantageously, the lifting mechanism 2 further comprises a base 25, the base 25 is disposed below the lifting bracket 24 and the rotating component 23 is rotatably disposed on the base 25.

Advantageously, a side of the pair of lifting parts 221 remote from the lawn mower mechanism 1 is further provided with a magnetic component 2211, the lifting bracket 24 is provided with a Hall plate 243 and a height of the pair of lifting parts 221 is sensed through the Hall plate 243 and the magnetic component 2211.

Advantageously, the bottom of the pair of overlapping parts 111 is provided with a first arc segment 1111, the first arc segment 1111 protrudes towards a side close to the pair of lifting parts 221 and the bottom of the first arc segment 1111 is disposed tangential to the top of the pair of lifting parts 221.

Advantageously, the bottom of the pair of overlapping parts 111 is further provided with a second arc segment 1112, the second arc segment 1112 is located on a side of the first arc segment 1111 away from the lifting mechanism 2 and connected with the first arc segment 1111, and the second arc segment 1112 is recessed toward a side away from the pair of lifting parts 221.

Advantageously, it further comprises a connecting rod mechanism 3, a first end of the connecting rod mechanism 3 is rotatably connected to the housing and a second end is rotatably connected to both sides of the mowing bracket 11 on the first central axis 20.

Advantageously, the lifting mechanism 2 is adapted to drive the connecting rod mechanism 3 to rotate around the first end and realize the lifting of the lawn mower mechanism 1 and the first arc segment 1111 of the pair of overlapping parts 111 slides relative to the top of the pair of lifting parts 221.

Advantageously, the lawn mower mechanism 1 comprises a mowing bracket 11, a mowing drive component and a mowing element, the mowing drive component is adapted to drive the movement of the mowing element, the mowing drive component is disposed inside the mowing bracket 11 and the pair of overlapping parts 111 are disposed on the top of the mowing bracket 11 near the lifting mechanism 2.

## Claims

1. A smart lawn mower height adjustment mechanism (1), comprising:
a housing,
a pair of overlapping parts (111), and
a lifting mechanism (2),
said pair of overlapping parts (111) being adapted to connect to the lawn mower mechanism (1), said lifting mechanism (2) having a first central axis (20) and a pair of lifting parts (221) that can be raised and lowered,
said pair of lifting parts (221) being symmetrically arranged on both sides of the first central axis (20),
said pair of overlapping parts (111) being adapted to be placed on said pair of lifting parts (221), and
said pair of overlapping parts (111) and said lawn mower mechanism (1) being suitable to be raised and lowered on the housing through the pair of lifting parts (221) of the lifting mechanism (2).

2. The smart lawn mower height adjustment mechanism (1) according to Claim 1, wherein
the lifting mechanism (2) comprises a lifting drive component (21) and a lifting component (22), the lifting drive component (21) has a first central axis (20), the lifting drive component (21) is adapted to drive the lifting component (22) to move along the first central axis (20), the lifting component (22) is provided with the pair of lifting parts (221) and the pair of lifting parts (221) are disposed on both sides of the lifting component (22) on the first central axis (20).

3. The smart lawn mower height adjustment mechanism (1) according to Claim 2, wherein
the lifting mechanism (2) further comprises a rotating component (23) and the output end of the lifting drive component (21) is connected to the rotating component (23) ;
the lifting component (22) further comprises a sleeve part (222) disposed between the pair of lifting parts (221), the sleeve part (222) is provided with a connecting hole in the middle, the sleeve part (222) is disposed on the outside of the rotating component (23), the inner side of the connecting hole is adapted to be threadedly connected to the outside of the rotating component (23) and the lifting drive component (21) is adapted to drive the rotating component (23) to rotate and realize the lifting movement of the lifting component (22).

4. The smart lawn mower height adjustment mechanism (1) according to Claim 3, wherein
a receiving cavity is provided inside the rotating component (23), the lifting drive component (21) is disposed within the receiving cavity of the rotating component (23) and the lifting drive component (21) is adapted to drive the rotating component (23) to rotate around the first central axis (20) to drive the lifting component (22) to move along the first central axis (20).

5. The smart lawn mower height adjustment mechanism (1) according to Claim 4, wherein
the lifting mechanism (21) further comprises a lifting bracket (24), the lifting drive component (21), the rotating component (23) and the lifting component (22) are all disposed in the lifting bracket (24), a side of the lifting bracket (24) near the lawn mower mechanism (1) is provided with a reach inlet (241), and the pair of overlapping parts (111) are adapted to pass through the reach inlet (241) and to be placed on the pair of lifting parts (221);
the lifting bracket (24) is further provided with chutes (242) on inner side walls of both sides of the first central axis (20) and the pair of lifting parts (221) are adapted to be slidably disposed in the chutes (242).

6. The smart lawn mower height adjustment mechanism (1) according to Claim 5, wherein
the lifting mechanism (2) further comprises a base (25), the base (25) is disposed below the lifting bracket (24) and the rotating component (23) is rotatably disposed on the base (25) ;
and/or, a side of the pair of lifting parts (221) remote from the lawn mower mechanism (1) is further provided with a magnetic component (2211), the lifting bracket (24) is provided with a Hall plate (243) and a height of the pair of lifting parts (221) is sensed through the Hall plate (243) and the magnetic component (2211).

7. The smart lawn mower height adjustment mechanism (1) according to any of Claims 1-6, wherein
the bottom of the pair of overlapping parts (111) is provided with a first arc segment (1111), the first arc segment (1111) protrudes towards a side close to the pair of lifting parts (221) and the bottom of the first arc segment (1111) is disposed tangential to the top of the pair of lifting parts (221).

8. The smart lawn mower height adjustment mechanism (1) according to Claim 7, wherein
the bottom of the pair of overlapping parts (111) is further provided with a second arc segment (1112), the second arc segment (1112) is located on a side of the first arc segment (1111) away from the lifting mechanism (2) and connected with the first arc segment (1111), and the second arc segment (1112) is recessed toward a side away from the pair of lifting parts (221).

9. The smart lawn mower height adjustment mechanism (1) according to Claim 7, wherein
it further comprises a connecting rod mechanism (3), a first end of the connecting rod mechanism (3) is rotatably connected to the housing and a second end is rotatably connected to both sides of the mowing bracket (11) on the first central axis (20) ;
the lifting mechanism (2) is adapted to drive the connecting rod mechanism (3) to rotate around the first end and realize the lifting of the lawn mower mechanism (1) and the first arc segment (1111) of the pair of overlapping parts (111) slides relative to the top of the pair of lifting parts (221).

10. The smart lawn mower height adjustment mechanism (1) according to Claim 9, wherein
the lawn mower mechanism (1) comprises a mowing bracket (11), a mowing drive component and a mowing element, the mowing drive component is adapted to drive the movement of the mowing element, the mowing drive component is disposed inside the mowing bracket (11) and the pair of overlapping parts (111) are disposed on the top of the mowing bracket (11) near the lifting mechanism (2).
